# EUROPEAN PATENT APPLICATION

(11) **EP 4 580 074 A1**
(43) Date of publication of application: **02.07.2025**
(21) Application number: 23867459.2
(22) Date of filing: 18.09.2023
(51) Int. Cl.: H04B 1/401

(54) **OPTICAL MODULE, OPTICAL COMMUNICATION DEVICE, AND OPTICAL COMMUNICATION SYSTEM**

(30) Priority: 19.09.2022 CN 202211138271
(71) Applicant: Huawei Technologies Co., Ltd., Shenzhen, Guangdong 518129 (CN)
(72) Inventor: JIANG, Fang, Shenzhen, Guangdong 518129 (CN); SUN, Xiaobin, Shenzhen, Guangdong 518129 (CN); YUAN, Quan, Shenzhen, Guangdong 518129 (CN)
(74) Representative: Isarpatent
(86) International application number: PCT/CN2023/119466
(87) International publication number: WO 2024/061171

(57) **Abstract**

This application relates to the field of optical communication technologies, and in particular, to an optical module, an optical communication device, and an optical communication system. Costs can be reduced, functions can be added, and an occupied volume can be reduced based on a service function and at least one operation and maintenance function. The optical module may include a control unit, a laser service driving circuit, an optical transmitting unit, and a first optical receiving unit. The control unit determines a target mode of the optical module from a plurality of working modes, and controls to output a target signal corresponding to the target mode to the laser service driving circuit. The plurality of working modes include at least one of an OTDR mode and a service mode. The laser service driving circuit outputs a laser signal to the optical transmitting unit based on the target signal. When the target mode is the OTDR mode, the first optical receiving unit receives and transmits, to the control unit, a second OTDR signal returned in an optical fiber. A first OTDR signal and the second OTDR signal are used to perform optical signal transmission analysis.

## Description

### TECHNICAL FIELD

This application relates to the field of optical communication technologies, and in particular, to an optical module, an optical communication device, and an optical communication system.

### BACKGROUND

In the field of optical communication, better transmission performance of an optical fiber indicates less impact of the optical fiber on a to-be-transmitted optical signal. This helps implement almost lossless transmission of the optical signal to a receiving end. Therefore, the transmission performance of the optical fiber plays a crucial role in ensuring high-quality transmission of the optical signal. At present, a common practice of performing operation and maintenance on an optical fiber network is to use an optical time domain reflectometer (optical time domain reflectometer, OTDR). The OTDR is manufactured based on light backscattering and a Fresnel reflection principle. The OTDR generally obtains attenuation information of the optical fiber by using backscattering light generated when light is propagated in the optical fiber. The OTDR may be configured to measure optical fiber attenuation and a connector loss, locate a fault position in the optical fiber, learn of distribution of optical fiber losses along lengths, and so on. In another implementation of operation and maintenance on the optical fiber network, pilot tone modulation may alternatively be performed on an optical signal. Pilot tone modulation may be performed to establish a low-speed channel-associated monitoring signal, so that the optical network (or even an all-optical network) may be conveniently monitored and managed.

Due to a size limitation of an optical module, a service function, an OTDR function, and a pilot tone modulation function usually need to be implemented through different discrete modules respectively. Therefore, operation and maintenance costs are very high. In addition, when a plurality of functions are implemented, there is a problem that it is unfavorable to implement a small form factor.

### SUMMARY

Embodiments of this application provide an optical module, an optical communication device, and an optical communication system, to provide the optical module, the optical communication device, and the optical communication system that have a service function and another operation and maintenance function and have features such as lower costs, more functions, and a smaller occupied volume.

According to a first aspect, an embodiment of this application provides an optical module. The optical module may include at least a control unit, a laser service driving circuit, an optical transmitting unit, and a first optical receiving unit.

The control unit is configured to: determine a target mode of the optical module from a plurality of working modes, and control to output a target signal corresponding to the target mode to the laser service driving circuit. The plurality of working modes may include but are not limited to at least one of the following modes: an optical time domain reflectometer (optical time domain reflectometer, OTDR) mode and a service mode.

The laser service driving circuit is configured to output a laser signal to the optical transmitting unit based on the target signal. If the target mode is the OTDR mode, the laser signal is a first OTDR signal; or if the target mode is the service mode, the laser signal is a service signal.

The optical transmitting unit is configured to transmit the laser signal.

The first optical receiving unit is configured to: when the target mode is the OTDR mode, receive and transmit, to the control unit, a second OTDR signal returned in an optical fiber. The first OTDR signal and the second OTDR signal are used to perform optical signal transmission analysis. For another example, the optical transmitting unit and the first optical receiving unit may be independent functional units, or may be integrated into a bidirectional optical sub-assembly (bidirectional optical sub-assembly, BOSA). This is not limited in this application.

The optical module may implement a service function and an OTDR function. In addition, in the optical module provided in this application, to implement the OTDR function, a high-cost OTDR dedicated chip (or OTDR logic chip) does not need to be disposed in the optical module. The module may implement switching between the OTDR function and the service function in a time division multiplexing manner by reusing the laser service driving circuit that implements the service mode under control of the control unit. In this way, the optical module may further implement the OTDR function while implementing the service function. Therefore, the optical module has features such as lower costs, a smaller occupied volume, and lower power consumption. In addition, the module may be used in more optical transmission scenarios such as an optical communication network.

In a possible design, the plurality of working modes further include a combination mode of a pilot tone modulation mode and the service mode. If the target mode is the combination mode, the laser signal is the service signal and a pilot tone modulation signal. The pilot tone modulation signal is used to modulate the service signal. That the optical transmitting unit is configured to transmit the laser signal is that the optical transmitting unit is specifically configured to transmit a service signal modulated based on the pilot tone modulation signal. In this design, the optical module provided in this application may implement the OTDR function and the service function, and may further implement a pilot tone modulation function. Therefore, the optical module may implement more functions.

In a possible design, the optical module further includes a second optical receiving unit. The second optical receiving unit is configured to receive the pilot tone modulation signal from the optical fiber. In this design, in addition to sending the pilot tone modulation signal, the optical module provided in this application may further receive a pilot tone modulation signal that is sent by another optical communication device or optical module through an optical fiber. In this way, the pilot tone modulation function in an optical communication system may be implemented. Therefore, the optical module provided in this application does not need an additional complex pilot tone modulation generation circuit, and may implement receiving and transmitting of the pilot tone modulation function by reusing a functional unit that is in the optical module and that implements the service function. Therefore, more functions may be provided. In addition, the module has advantages such as lower costs, smaller size, and lower power consumption. In addition, the module may be further used in more optical transmission scenarios.

In a possible design, a first output end of the control unit is coupled to a first input end of the laser service driving circuit through a first line. A second output end of the control unit is coupled to a second input end of the laser service driving circuit through a second line. That the control unit is configured to control to output a target signal corresponding to the target mode to the laser service driving circuit is that the control unit is specifically configured to: if the target mode is the OTDR mode, output a target signal corresponding to the OTDR mode to the laser service driving circuit through the first line. Alternatively, that the control unit is configured to control to output a target signal corresponding to the target mode to the laser service driving circuit is that the control unit is specifically configured to: if the target mode is the service mode, output a target signal corresponding to the service mode through the second line.

In this design, at least two lines that are respectively used for the OTDR mode and the service mode are disposed between the control unit and the laser service driving circuit, so that mode switching of the optical module between the OTDR mode and the service mode may be implemented. In this way, the control unit may select, according to a time division multiplexing principle, different working modes that respectively correspond to the optical module in different time periods.

In a possible design, the plurality of working modes further include the combination mode of the pilot tone modulation mode and the service mode. That the control unit is configured to control to output a target signal corresponding to the target mode to the laser service driving circuit is that the control unit is specifically configured to: if the target mode is the combination mode, output a first target sub-signal through the first line, and output a second target sub-signal through the second line. The first target sub-signal indicates the pilot tone modulation mode, and the second target sub-signal indicates the service mode.

In this design, when implementing the pilot tone modulation function, the optical module may reuse a transmission line in the OTDR mode in the foregoing design. In this way, based on the same transmission line, different working modes may correspond to different time periods. In addition, simultaneous processing in the pilot tone modulation mode and the service mode may be performed. In other words, the pilot tone modulation signal and the service signal in the optical module may be simultaneously received and sent. Therefore, simultaneous processing in the pilot tone modulation mode and the service mode may be implemented through two transmission lines between the control unit and the laser service driving circuit. In addition, in an optional example, the pilot tone modulation signal may further act on the service signal, to implement pilot tone modulation transmission of the service signal.

In a possible design, there are a plurality of different scenarios in which the optical module provided in this embodiment of this application implements the OTDR mode, including but not limited to one of the following scenarios.

Scenario A: The target mode is the OTDR mode, and the target signal is a third OTDR signal. That the laser service driving circuit is configured to output a laser signal to the optical transmitting unit based on the target signal is that the laser service driving circuit is specifically configured to: perform driving processing on the third OTDR signal, and output a first OTDR signal having a driving capability. In this scenario, after determining the OTDR mode, the control unit may be used as an OTDR generation unit to generate an OTDR signal. In addition, after the laser service driving circuit performs driving processing on the OTDR signal generated by the control unit, the OTDR signal may be transmitted through the optical transmitting unit. In this way, the OTDR function of the optical module may be implemented.

Based on the foregoing scenario, the optical module further includes a filter circuit. An output end of the control unit is coupled to an input end of the laser service driving circuit through the filter circuit. The filter circuit is configured to: filter the third OTDR signal, and output a filtered third OTDR signal to the laser service driving circuit. In this scenario, after the control unit generates the OTDR signal and before the OTDR signal enters the laser service driving circuit, filtering processing may be further performed on the OTDR signal. In this way, an OTDR signal with better quality may be obtained. Therefore, better operation and maintenance effects may be achieved.

Scenario B: The target mode is the OTDR mode. In this scenario, the target signal may be an OTDR indication signal indicating to generate an OTDR signal. That the laser service driving circuit is configured to output a laser signal to the optical transmitting unit based on the target signal is that the laser service driving circuit is specifically configured to generate the first OTDR signal based on the target signal. In this scenario, after determining the OTDR mode, the control unit may further send the OTDR indication signal used to generate the OTDR signal to the laser service driving circuit. Then, the laser service driving circuit may generate the OTDR signal based on the OTDR indication signal, and after performing driving processing on the OTDR signal, the OTDR signal is transmitted through the optical transmitting unit. In this way, the OTDR function of the optical module may be implemented.

Scenario C: The optical module further includes an amplification and filter circuit. An output end of the control unit is coupled to an input end of the optical transmitting unit through the amplification and filter circuit. In this scenario, the target signal is an OTDR indication signal indicating to generate an OTDR signal. The amplification and filter circuit is configured to: generate a fourth OTDR signal based on the target signal from the control unit, and output the fourth OTDR signal to the optical transmitting unit. The optical transmitting unit is further configured to transmit the fourth OTDR signal. In this scenario, after the control unit determines the OTDR mode, the control unit and the laser service driving circuit may generate the OTDR signal, and an additional amplification and filter circuit may be further disposed. In this way, the control unit may send the OTDR indication signal used to generate the OTDR signal to the amplification and filter circuit. Then, the amplification and filter circuit may generate the OTDR signal based on the OTDR indication signal, and after driving processing is performed on the OTDR signal, the OTDR signal is transmitted through the optical transmitting unit. In this way, the OTDR function of the optical module may be implemented.

Based on the foregoing scenarios, the optical module may select an appropriate scenario to implement the OTDR function of the optical module based on one or more of an actual service requirement, function allocation of each functional unit, and the like.

In a possible design, with reference to the implementation scenario of the OTDR mode, the implementation and the transmission line in the OTDR mode may be reused in an implementation scenario of the pilot tone modulation signal. For example, if the control unit determines that the target mode is the combination mode, the pilot tone modulation signal may be generated in but not limited to one of the following manners.
A: The target signal output by the control unit is the pilot tone modulation signal.
B: That the laser service driving circuit is configured to output a laser signal to the optical transmitting unit based on the target signal is that the laser service driving circuit is specifically configured to generate the pilot tone modulation signal based on the target signal. The target signal is a pilot tone modulation indication signal indicating to generate the pilot tone modulation signal.
C: The optical module further includes an amplification and filter circuit. An output end of the control unit is coupled to an input end of the optical transmitting unit through the amplification and filter circuit. The amplification and filter circuit is configured to: generate the pilot tone modulation signal based on the target signal from the control unit, and output the pilot tone modulation signal to the optical transmitting unit. The target signal is a pilot tone modulation indication signal indicating to generate the pilot tone modulation signal.

In a possible design, that the control unit is configured to determine a target mode of the optical module from a plurality of working modes is that the control unit is specifically configured to: detect and respond to a first preset event, determine that the target mode is the OTDR mode, and determine, in time other than the OTDR mode, that the target mode includes the service mode. The first preset event includes but is not limited to one or a combination of: detecting that a first preset condition for enabling the OTDR mode is satisfied, detecting a first user instruction for enabling the OTDR mode, and receiving a communication control signal for enabling the OTDR mode from an optical communication device.

In this design, the control unit may determine switching between the OTDR mode and the service mode in a plurality of manners. In this way, transmission confidence and the like of the service signal may be ensured while operation and maintenance are implemented on the optical module and the optical fiber line by using the OTDR function.

In a possible design, the control unit is further configured to receive a second OTDR signal from the first optical receiving unit. In addition, the control unit is further configured to obtain exception information of the second OTDR signal relative to the first OTDR signal based on the second OTDR signal. The exception information is used to determine a loss or a fault position in the optical fiber. In this design, in a scenario in which the optical module provided in this application is in the OTDR mode, troubleshooting in the optical fiber may be implemented based on the OTDR function.

According to a second aspect, this application further provides an optical communication device. The optical communication device may include at least one optical module described in any one of the first aspect or the possible designs of the first aspect and one or more processors. The one or more processors are configured to: process a to-be-transmitted service signal, and output the to-be-transmitted service signal to a first optical module. The first optical module is any one of the at least one optical module. Optionally, the optical communication device may transmit different service signals through different optical modules, for example, may transmit a to-be-transmitted second service signal to a second optical module. Alternatively, the optical communication device may implement transmission through a same optical module, for example, also transmit a second service signal through the first optical module.

In a possible design, the one or more processors are further configured to: detect and respond to a second preset event, and output, to a control unit in the first optical module, a communication control signal used to enable an OTDR mode. The second preset event includes one or a combination of: detecting that a second preset condition for enabling the OTDR mode is satisfied, and detecting a second user instruction for enabling the OTDR mode. According to this design, the optical communication device may monitor whether to enable the OTDR mode, and if a corresponding second preset event is detected, may control the optical module to implement network detection in the OTDR mode.

According to a third aspect, this application further provides an optical communication system, including at least one optical communication device described in any one of the second aspect or the possible designs of the second aspect. A first optical communication device is configured to: when a target mode is an OTDR mode, transmit a first OTDR signal to an optical fiber between the first optical communication device and a second communication device through an included first optical module. The first optical communication device is further configured to: when the target mode is the OTDR mode, receive, through the included first optical module, a second OTDR signal returned in the optical fiber between the first optical communication device and the second communication device. The first optical communication device is further configured to: when the target mode is a service mode, transmit a service signal to the second communication device through the included first optical module. The first optical communication device is the optical communication device described in any one of the second aspect or the possible designs of the second aspect. It may be understood that the first optical communication device provided in this application may transmit an OTDR signal or a service signal with another optical communication device through an optical module, and has features such as low costs, low power consumption, and a small volume.

In a possible design, a plurality of working modes further include a combination mode of a pilot tone modulation mode and the service mode. If the target mode is the combination mode, a laser signal is the service signal and a pilot tone modulation signal. In an optional example, the first optical communication device is further configured to: when the target mode is the combination mode, transmit the service signal to the second communication device through the included first optical module, and transmit the pilot tone modulation signal to the second communication device through the included first optical module.

The optical communication device in the second aspect includes the optical module in each design in the first aspect, and the optical communication system in the third aspect also includes the optical module in each design in the first aspect. Therefore, technical effects that can be achieved by each design in the first aspect can also be achieved. Details are not described herein again.

### BRIEF DESCRIPTION OF DRAWINGS

FIG. 1 is a diagram of some scenarios of an optical communication system;
FIG. 2 is a diagram of a structure of an optical module having an OTDR function;
FIG. 3 is a diagram 1 of a possible structure of an optical module according to an embodiment of this application;
FIG. 4 is a diagram 2 of a possible structure of an optical module according to an embodiment of this application;
FIG. 5 is a diagram 3 of a possible structure of an optical module according to an embodiment of this application;
FIG. 6 is a diagram 4 of a possible structure of an optical module according to an embodiment of this application;
FIG. 7 is a diagram of a possible architecture of an optical communication system according to an embodiment of this application; and
FIG. 8 is a diagram of another possible architecture of an optical communication system according to an embodiment of this application.

### DESCRIPTION OF EMBODIMENTS

The following describes technical solutions in embodiments of this application in detail with reference to the accompanying drawings in embodiments of this application. It should be understood that, the following embodiments are merely some but not all of embodiments of this application.

An optical module provided in embodiments of this application may be used in an optical communication system. The optical communication system is a communication system in which light is used as a carrier, and high-purity glass is used to produce an ultra-fine optical fiber as a transmission medium. The optical communication system is a communication system in which light is used to transmit information through photoelectric conversion. The optical communication system may exist in a metro scenario of short-distance transmission, a wireless fronthaul scenario, a data communication scenario, or the like. The optical communication system may be, for example, a passive optical network (passive optical network, PON) system. The PON system is a point-to-multipoint (point-to-multipoint, P2MP) communication technology. For example, the PON system may be an ethernet passive optical network (ethernet PON, EPON) system, a gigabit-capable passive optical network (gigabit-capable PON, GPON) system, a wavelength division multiplexing passive optical network (wavelength division multiplexing PON, WDM PON) system, or an asynchronous transfer mode passive optical network (asynchronous transfer mode PON, APON) system.

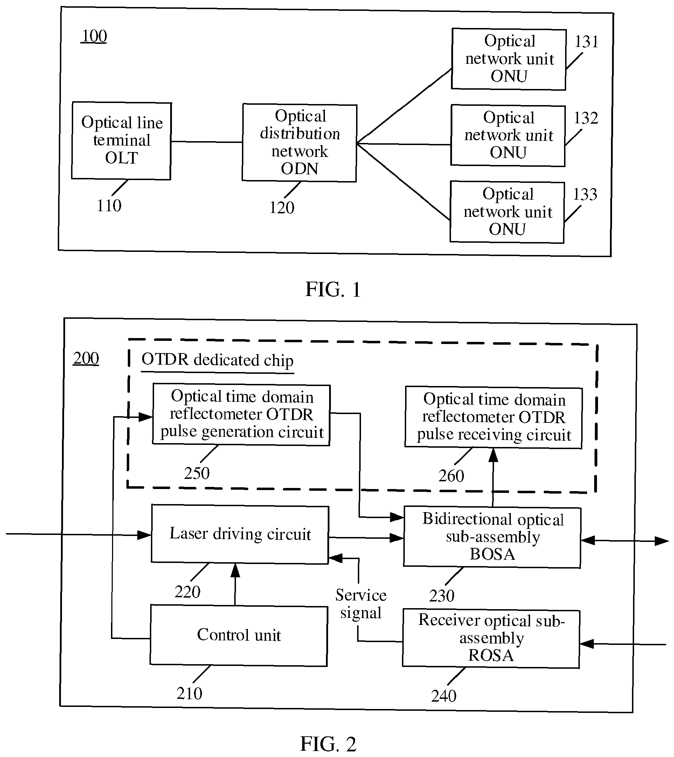

In an example of a possible application scenario, FIG. 1 is a diagram of some scenarios of an optical communication system. The PON system 100 may include at least one optical line terminal (optical line terminal, OLT) 110, at least one optical distribution network (optical distribution network, ODN) 120, and at least one optical network terminal (optical network terminal, ONT) or optical network unit (optical network unit, ONU). For ease of description, the ONU refers to the ONT or the ONU in this specification. In FIG. 1, three ONUs, namely, ONUs 131 to 133, are used as an example. A person skilled in the art should understand that, in actual networking, a quantity of ONUs may be any quantity. The quantity of ONUs is not limited in this application. The OLT 110 provides a network-side interface for the PON system 100. The ONUs 131 to 133 provide user-side interfaces for the PON system 100, and are connected to the ODN 120. The ODN 120 is a network including an optical fiber and a passive optical splitter, is configured to connect the OLT 110 and the ONUs 131 to 133, and is configured to distribute or reuse optical signals between the OLT 110 and the ONUs 131 to 133.

An optical module provided in embodiments of this application may be integrated into any optical communication device in an optical communication system, or may exist independently in the optical communication system. The optical communication device may be, for example, an optical device such as the ONU, the ODU, or the OLT described in the foregoing content, or may be a packet transport network (packet transport network, PTN) device, an optical transport network (optical transport network, OTN) device, or the like. The optical module may be mainly configured to transmit an optical signal.

Before a specific implementation is described, some terms that may appear in the following are first described as an example.
(1) An OTDR is an optical fiber instrument used for feature analysis, troubleshooting, and maintenance of an optical communication network. The OTDR is manufactured based on light backscattering and a Fresnel reflection principle. The OTDR generally obtains attenuation information of an optical fiber by using backscattering light generated when light is propagated in the optical fiber. In this way, the OTDR may indirectly measure an optical fiber loss and an optical fiber fault location (such as a reflection point). Currently, an optical module having an OTDR function has been widely used in optical fiber communication.

In a possible example, FIG. 2 is a diagram of a structure of an optical module having an OTDR function. The optical module 200 may include at least a control unit 210, a laser driving circuit 220, a bidirectional optical sub-assembly (bidirectional optical sub-assembly, BOSA) 230, and a receiver optical sub-assembly (receiver optical sub-assembly, ROSA). In addition, because the optical module 200 in FIG. 2 has the OTDR function, the optical module 200 may further include an OTDR dedicated chip (or an OTDR logic chip) configured to implement the OTDR function. The OTDR dedicated chip may include at least an OTDR pulse generation circuit 250 and an OTDR pulse receiving circuit 260. Optionally, although not shown in FIG. 2, the OTDR dedicated chip may further include functions such as calculation and storage of sampled pulse data, and OTDR pulse encoding and decoding. Generally, OTDR pulse receiving may include: amplification, filtering, and sampling of an OTDR pulse. However, the OTDR dedicated chip (or the OTDR logic chip) and a related circuit thereof have disadvantages such as high costs, high power consumption, and a large occupied area. This is unfavorable to implement a small form factor of a module.

For another example, to improve device integration, currently, some modules have two functions: a service function and an OTDR function. This further leads to problems of high module costs and difficulty in implementing a small form factor. Because an optical fiber communication scenario has high requirements on costs and power consumption, how to reduce costs of the optical module, reduce power consumption, reduce a package volume, and so on is worth researching.

(2) Pilot tone modulation is to modulate a low-speed signal on a high-speed service optical signal. Pilot tone modulation can be performed to implement functions such as performance monitoring, wavelength labeling, fiber connection verification, and fault locating on a communication signal. Generally, a pilot tone modulation signal uses frequency modulation of a low frequency, or amplitude modulation of a low amplitude. At a transmitting end, after the pilot tone modulation signal is superposed with a service optical signal, the pilot tone modulation signal is transmitted together with the service optical signal. At a receiving end, the pilot tone modulation signal may be separated from the service optical signal through a low-pass filter. The pilot tone modulation signal may carry some information, for example, state information, monitoring information, and configuration information of an optical module, and specifically, for example, optical link and alarm information, and an optical module power, temperature, current, or voltage alarm. A maintenance capability in a metro scenario, a wireless fronthaul scenario, or a data communication scenario may be greatly improved by using the pilot tone modulation signal.

For example, in the scenario shown in FIG. 2, there is an optical module including an OTDR function and a service function. However, the optical module in this scenario still does not have a pilot tone modulation function. This is inconvenient to perform performance monitoring and the like on the communication signal.

In view of this, an embodiment of this application provides an optical module. The optical module has a service function and an OTDR function, and the optical module does not need to use a high-cost OTDR dedicated chip (or OTDR logic chip). The optical module may implement the OTDR function by reusing a laser driving circuit in a service mode. In addition, the optical module may further implement a pilot tone modulation function, may generate pilot tone modulation information, and may further receive pilot tone modulation information from an optical fiber. Therefore, the optical module provided in this application has features such as lower costs, more functions, a smaller occupied volume, and lower power consumption.

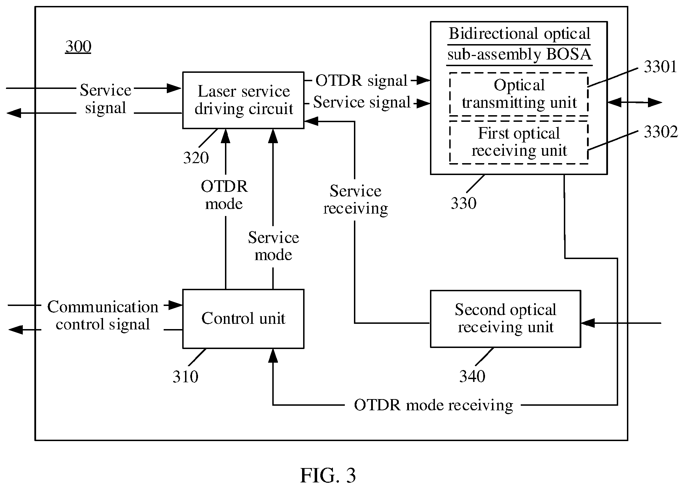

FIG. 3 is a diagram of a possible structure of an optical module according to an embodiment of this application. The optical module 300 provided in this embodiment of this application may include at least a control unit 310, a laser service driving circuit 320, an optical transmitting unit 3301, and a first optical receiving unit 3302.
(1) The control unit 310 may be configured to determine a target mode of the optical module from a plurality of working modes, and may further control to output a target signal corresponding to the target mode to the laser service driving circuit 320. Optionally, the control unit 310 may be generally implemented by using a module such as a microcontroller unit (microcontroller unit, MCU) or a digital signal processor (digital signal processor, DSP). This is not limited in this application.

In a possible scenario, the plurality of working modes may include at least one of an OTDR mode and a service mode. For example, the control unit 310 may determine, in a first time period, that the target mode of the optical module is the OTDR mode, and may determine, in a second time period, that the target mode of the optical module is the service mode. In other words, the control unit may determine, in a time division multiplexing manner, mode switching of the target mode between the OTDR mode and the service mode. It may be understood that, in the OTDR mode, the optical module 300 does not process or transmit a service signal. Therefore, mutual interference between an OTDR signal and the service signal can be avoided when fault detection is performed on an optical fiber based on the OTDR signal.

For example, that the control unit determines a target mode of the optical module from a plurality of working modes may be implemented as follows: The control unit detects and responds to a first preset event, and determines that the target mode is the OTDR mode. In addition, optionally, the control unit may further determine, in time other than the OTDR mode, that the target mode includes the service mode. The first preset event includes but is not limited to one or a combination of the following manners.

Manner A: The control unit 310 detects that a first preset condition for enabling the OTDR mode is satisfied.

Optionally, the first preset condition may be a preset periodicity. For example, assuming that the preset periodicity is one hour, the control unit 310 controls the optical module to enable the OTDR mode every hour, to detect whether a fault position exists in the optical fiber. Therefore, a transmission signal-to-noise ratio of the service signal may be ensured. In another optional manner, the first preset condition may alternatively be that an optical parameter such as an optical power, light intensity, or light flux for processing an optical signal reaches a corresponding preset threshold requirement. For example, if it is determined that an optical power of the service signal received by the optical module 300 is less than an optical power threshold, it is determined and detected that the first preset condition for enabling the OTDR mode is satisfied, to implement timely detection on the optical fiber. In this way, a problem of a low optical power of the service signal caused by an optical fiber transmission fault can be avoided. In addition, the first preset condition may alternatively be another possible condition that can be implemented by the optical module and that is used to automatically enable the OTDR mode. This is not limited in this application.

Manner B: The control unit 310 detects a first user instruction for enabling the OTDR mode.

Optionally, a preset switch may be disposed in the optical module. If the control unit 310 detects a user operation performed by a user on the preset switch, it may be determined that the first user instruction is detected, to trigger enabling of the OTDR mode, to implement optical fiber troubleshooting. The preset switch may be implemented by using a button, a key, or the like. This is not limited in this application.

Manner C: The control unit 310 receives a communication control signal for enabling the OTDR mode from an optical communication device.

Optionally, the optical module 300 may be generally integrated into the optical communication device, and is used as an optical transceiver unit of the optical communication device. Based on this, the control unit 310 included in the optical module 300 may further determine the target mode from the plurality of working modes based on the communication control signal of the optical communication device. For example, the optical communication device may determine, in an automatic detection manner such as Manner A, or in a manual detection manner such as Manner B, whether the OTDR mode needs to be enabled.

In a possible embodiment, with reference to FIG. 3, a first output end of the control unit 310 may be coupled to a first input end of the laser service driving circuit through a first line. A second output end of the control unit 310 may be coupled to a second input end of the laser service driving circuit through a second line. The control unit 310 may indicate, to the laser service driving circuit 320 through the first line, that the target mode is the OTDR mode. Alternatively, the control unit 310 may further indicate, to the laser service driving circuit 320 through the second line, that the target mode is the service mode.

It may be understood that, when the target mode is a different working mode, target signals output by the control unit 310 may be different.

Optionally, if the target mode is the OTDR mode, the target signal may be an OTDR signal. Alternatively, the target signal may be an OTDR indication signal or the like indicating to generate an OTDR signal. For example, in the OTDR mode, a generation scenario of the OTDR signal may include but is not limited to the following several possible scenarios.

Scenario A: The control unit 310 generates an OTDR pulse signal (which may also be referred to as a "third OTDR signal").

For example, on a basis of determining that the target mode is the OTDR mode, the control unit 310 may transmit the OTDR pulse signal to the laser service driving circuit 320 as the target signal through the first line shown in FIG. 3. Then, the laser service driving circuit 320 performs driving processing on the OTDR pulse signal, and outputs an OTDR pulse signal having a driving capability (which may also be referred to as a "first OTDR signal").

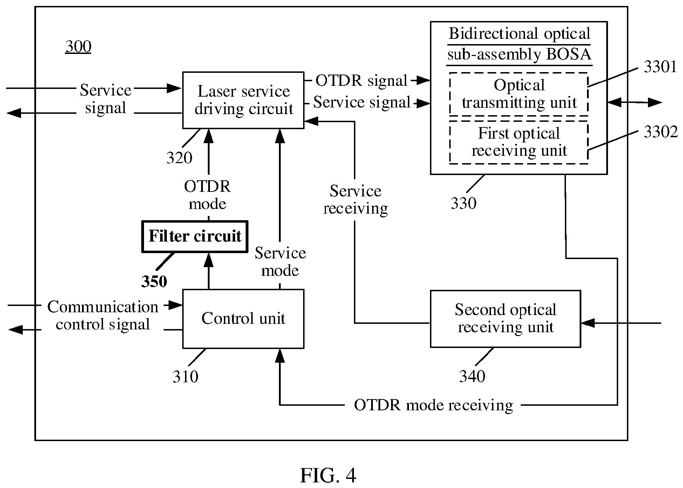

In another possible example, refer to FIG. 4. FIG. 4 is a diagram of another possible structure of an optical module according to an embodiment of this application. The optical module 300 may further include a filter circuit 350. An output end of the control unit 310 may be coupled to an input end of the laser service driving circuit 320 through the filter circuit 350. For example, the filter circuit 350 may be configured to filter the third OTDR signal generated by the control unit 310, and output a filtered third OTDR signal to the laser service driving circuit 320. In this way, the filter circuit 350 performs filtering processing on the OTDR pulse signal, so that an OTDR pulse signal with better quality may be output. Therefore, detection accuracy based on the OTDR pulse signal may be improved.

Scenario B: The control unit 310 indicates the laser service driving circuit 320 to generate an OTDR pulse signal.

For example, on a basis of determining that the target mode is the OTDR mode, the control unit 310 may further transmit the OTDR indication signal to the laser service driving circuit 320 as the target signal through the first line shown in FIG. 3. Then, the laser service driving circuit 320 may generate an OTDR pulse signal based on the OTDR indication signal. In addition, after performing driving processing on the generated OTDR pulse signal, the laser service driving circuit 320 outputs an OTDR pulse signal having a driving capability (which may also be referred to as a "first OTDR signal").

Scenario C: The control unit 310 indicates an amplification and filter circuit 360 to generate an OTDR pulse signal having a driving capability.

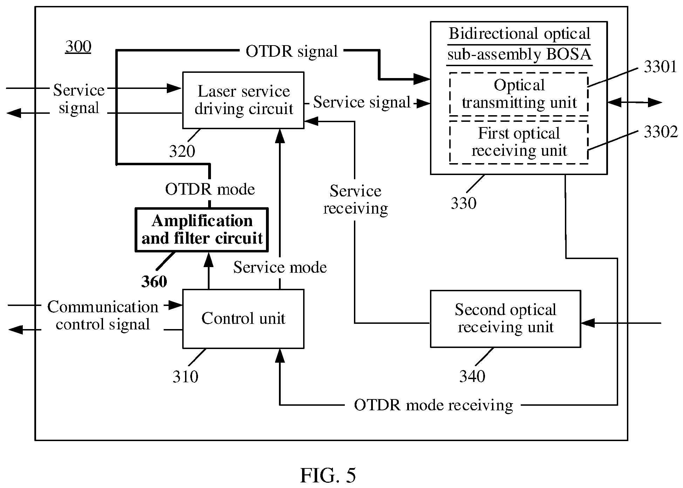

For example, FIG. 5 is a diagram of still another possible structure of an optical module according to an embodiment of this application. The optical module 300 may further include the amplification and filter circuit 360. An output end of the control unit 310 may be coupled to an input end of the optical transmitting unit 3301 through the amplification and filter circuit 360. In addition, on a basis of determining that the target mode is the OTDR mode, the control unit 310 may further output, to the amplification and filter circuit 360, the OTDR indication signal used to generate an OTDR pulse signal as the target signal. The amplification and filter circuit 360 may be configured to generate, based on the OTDR indication signal from the control unit 310, an OTDR pulse signal having a driving capability (which may also be referred to as a "fourth OTDR signal"). Then, the amplification and filter circuit 360 outputs the fourth OTDR signal to the optical transmitting unit 3301, so that the optical transmitting unit 3301 transmits the fourth OTDR signal.

In another optional manner, if the target mode is the service mode, the target signal may be a service indication signal indicating to transmit the service signal.

With reference to content shown in any one of the scenarios in FIG. 3 to FIG. 5, it may be learned that the service signal in the optical module is generally from the optical fiber. It may also be understood as that the service signal is generally from an adjacent optical communication device or optical module. Therefore, the target signal generated by the control unit 310 in the service mode may be understood as indicating the laser service driving circuit 320 to generate a drive signal (which, for example, may be a drive voltage signal or a drive current signal). The drive signal may be used to drive the service signal received by the laser service driving circuit 320, and then transmit the service signal to the optical transmitting unit 3301, so that the optical transmitting unit 3301 sends the service signal.

(2) The laser service driving circuit 320 is configured to output a laser signal to the optical transmitting unit based on the target signal.

For example, based on this embodiment, the control unit 310 may determine the OTDR mode or the service mode. Based on this, the laser service driving circuit 320 may use different processing manners in scenarios in which the target mode is a different working mode.

In a possible scenario, when the target mode is the OTDR mode, the target signal may be the OTDR signal. Alternatively, the target signal may be the OTDR indication signal used to generate the OTDR signal. Optionally, if the target signal is the OTDR signal, the laser service driving circuit 320 may receive the OTDR signal. Then, the laser service driving circuit 320 performs driving processing on the OTDR signal, so that an output laser signal is an OTDR signal having a driving capability. In another optional manner, if the target signal is the OTDR indication signal, the laser service driving circuit 320 may generate the OTDR signal based on the OTDR indication signal. Then, after the laser service driving circuit 320 performs driving processing on the OTDR signal, an output laser signal is also an OTDR signal having a driving capability. In addition, in the OTDR mode, the laser service driving circuit 320 does not process the service signal.

In another possible scenario, when the target mode is the service mode, the target signal may be the service indication signal indicating to transmit the service signal. For example, after receiving the service indication signal, the laser service driving circuit 320 may generate a drive signal based on the service indication signal. The drive signal may be, for example, a drive voltage signal or a drive current signal. The drive signal may be used to drive the service signal received by the laser service driving circuit 320, and then transmit the drive signal to the optical transmitting unit 3301 as the laser signal, so that the optical transmitting unit 3301 sends the service signal. In addition, in the service mode, the laser service driving circuit 320 may receive a to-be-transmitted service signal from an optical communication device or an upper-layer optical communication device (or optical module). Then, the laser service driving circuit 320 transmits the to-be-transmitted service signal together with the drive signal to the optical transmitting unit 3301, so that the optical transmitting unit 3301 sends the service signal when driven by the drive signal.

(3) The optical transmitting unit 3301 may be configured to transmit the laser signal. It may be understood that, when the target mode is the OTDR mode, the laser signal is the OTDR signal having the driving capability. When the target mode is the service mode, the laser signal may be the drive signal and a service signal that needs to be transmitted.

(4) The first optical receiving unit 3302 may be configured to: when the target mode is the OTDR mode, receive a second OTDR signal returned in the optical fiber. Then, the first optical receiving unit 3302 transmits the second OTDR signal to the control unit 310. The first OTDR signal and the second OTDR signal may be jointly used to perform optical signal transmission analysis, for example, obtain exception information of the second OTDR signal relative to the first OTDR signal. The exception information may be used to determine a loss or a fault position in the optical fiber. For example, the control unit 310 may determine a fault problem or the like in the optical fiber based on the first OTDR signal, the second OTDR signal, a reflection point or a refraction point at which the first OTDR signal is changed to the second OTDR signal, and the like.

For example, after entering an optical fiber link, an OTDR signal (which is assumed to be referred as a "first OTDR signal") transmitted by the optical transmitting unit 3301 may be reflected back through the optical fiber link (where the signal that is reflected back is assumed to be referred as a "second OTDR signal" in this case). In this case, the second OTDR signal may be received through the first optical receiving unit 3302. The first OTDR signal and the second OTDR signal are only used to describe different transmission phases. For example, the first OTDR signal indicates a transmitting phase of the OTDR signal, and the second OTDR signal indicates a reflection (or refraction) phase of the OTDR signal.

For example, the control unit 310 is further configured to: receive the second OTDR signal, and perform signal processing such as amplification and sampling on the second OTDR signal. Optionally, the control unit 310 may perform fault analysis on the second OTDR signal. In another optional manner, if the optical module 300 is integrated into an optical communication device, the control unit 310 may further transmit a second OTDR signal on which signal processing is performed to a processor in the optical communication device for processing. This is not limited in this application.

In another optional manner, the optical transmitting unit 3301 and the first optical receiving unit 3302 may be further integrated into a BOSA 330. This is not limited in this application.

(5) A second optical receiving unit 340 may be configured to receive a service signal from another optical communication device or optical module.

For example, the second optical receiving unit 340 may be implemented by using a ROSA.

Optionally, after receiving the service signal, the second optical receiving unit 340 may convert the service signal into an electrical signal of a specific amplitude. Then, the second optical receiving unit 340 transmits the electrical signal to the laser service driving circuit 320 for signal processing such as amplification, shaping, and decision, so that the laser service driving circuit 320 performs signal analysis on a service signal on which signal processing is performed, or transmits the service signal to a processor in the optical communication device for signal analysis. In this way, the service signal may be received.

Based on the optical module described in the foregoing embodiment, the OTDR function may be implemented by reusing a plurality of functional units included in the optical module that implements service transmission, so that an OTDR dedicated chip (or an OTDR logic chip) does not need to be disposed in the optical module. Therefore, in this application, costs may be reduced, a volume of the optical module may be reduced, and so on.

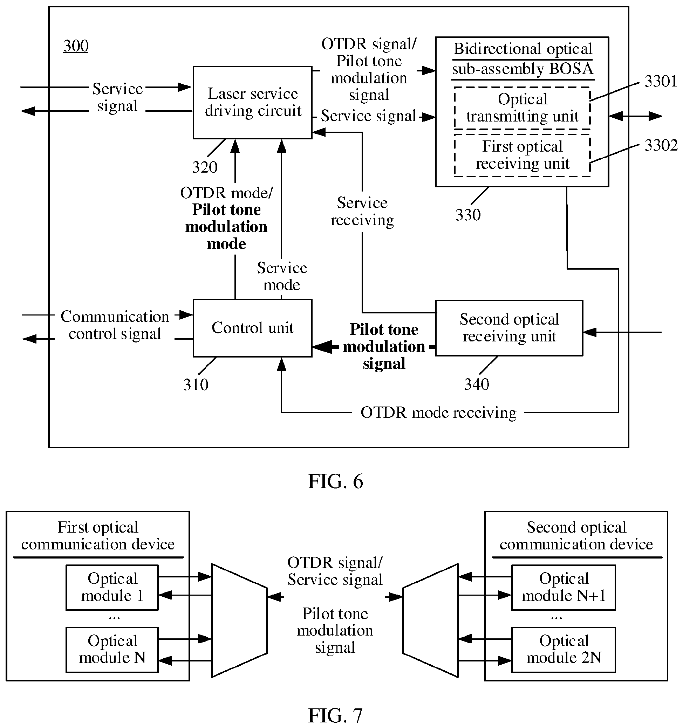

FIG. 6 is a diagram of a possible structure of an optical module according to an embodiment of this application. The optical module 300 shown in FIG. 6 is similar to several functional modules included in FIG. 3, and each functional module has a function described in FIG. 3. A difference lies in the following:

A control unit 310 may be further configured to implement a pilot tone modulation function in a scenario in which it is determined that the optical module is not in an OTDR mode. Optionally, the pilot tone modulation function may be combined with a service function. This combination is assumed to be referred to as a "combination mode". Based on this, in addition to the OTDR mode and the service mode that are described in the foregoing embodiment, a plurality of working modes included in the control unit 310 may further include the combination mode. A pilot tone modulation mode cannot be combined with the OTDR mode, but may be combined with the service mode. For example, if the pilot tone modulation mode is combined with the service mode, a pilot tone modulation signal may act on a current service signal.

For example, the pilot tone modulation signal may reuse the generation manner and the transmission line (that is, the "first line" in FIG. 3) of the OTDR signal in the foregoing embodiment. For example, the pilot tone modulation signal may be generated through the control unit 310. For another example, the control unit 310 may alternatively indicate a laser service driving circuit 320 to generate the pilot tone modulation signal. For another example, the pilot tone modulation signal may be generated through an additional amplification and filter circuit 360. Specific content is not described herein again. A difference lies in that the pilot tone modulation signal and the OTDR signal have different pulses, and therefore different functions may be implemented.

For another example, although not shown in FIG. 6, in this embodiment of this application, the pilot tone modulation mode may alternatively be implemented through a third line. In this way, different function modes may be implemented through different lines.

In the combination mode, the laser service driving circuit 320 may simultaneously send the pilot tone modulation signal and the service signal to an optical transmitting unit 3301. In this scenario, the optical transmitting unit 3301 may perform modulation (for example, low-speed modulation) on the service signal based on the pilot tone modulation signal. Then, the optical transmitting unit 3301 transmits a modulated service signal.

In addition, as shown in FIG. 6, the optical module 300 may further receive, through the second optical receiving unit 340, a pilot tone modulation signal from another optical communication device or optical module. In another optional manner, the second optical receiving unit 340 may further simultaneously receive a pilot tone modulation signal and a service signal from another optical communication device or optical module. In this case, the optical module 300 may perform receiving processing on the received service signal based on the received pilot tone modulation signal, to restore the service signal that is not modulated.

Based on the optical module provided in the foregoing embodiment, the optical module may further reuse the transmission line and the implementation for implementing the OTDR function to implement the pilot tone modulation function. In this way, no additional module, chip, or the like for implementing the pilot tone modulation function is needed. Therefore, the optical module has features such as low costs, a small size, and more functions. Therefore, the optical module provided in this embodiment of this application may be more widely used in an optical communication network scenario. It may be understood that, in the example shown in FIG. 6, the pilot tone modulation function may alternatively be extended based on the scenario shown in FIG. 4 or FIG. 5. Details are not repeatedly described in this application.

An embodiment of this application further provides an optical communication device. The optical communication device may include at least one optical module described in the foregoing embodiment and one or more processors. The one or more processors are configured to: process a to-be-transmitted service signal, and output the to-be-transmitted service signal to a laser service driving circuit in the optical module, to transmit the service signal in a scenario in which the optical module is in a service mode.

In a possible design, the one or more processors are further configured to: detect and respond to a second preset event, and output, to a control unit 310 in the optical module 300, a communication control signal used to enable an OTDR mode. The second preset event may include but is not limited to the following events: detecting that a second preset condition for enabling the OTDR mode is satisfied, and detecting a second user instruction for enabling the OTDR mode. It may be understood that because the optical communication device has the one or more processors, a target mode may be determined based on processing of the processors in the optical communication device, and the one or more processors indicate the optical module 300 in the optical communication device to perform corresponding mode processing.

An embodiment of this application further provides an optical communication system. The optical communication system may include at least one optical communication device described in the foregoing embodiment.

In a possible scenario, refer to FIG. 7. FIG. 7 is a diagram of a possible architecture of an optical communication system according to an embodiment of this application. For example, the optical communication system may include a first optical communication device and a second optical communication device. The first optical communication device may include at least one optical module (such as optical modules 1 to N shown in FIG. 7). The second optical communication device may also include at least one optical module (such as optical modules N+1 to 2N shown in FIG. 7).

The first optical communication device may be configured to: when a target mode is an OTDR mode, transmit a first OTDR signal to an optical fiber between the first optical communication device and the second optical communication device through an included first optical module. In addition, the first optical communication device may further receive, through the included first optical module, a second OTDR signal returned in the optical fiber between the first optical communication device and the second optical communication device. Moreover, the first optical communication device may be further configured to: when the target mode is a service mode, transmit a service signal to the second optical communication device through the included first optical module.

In addition, when the target mode is not in a scenario of the OTDR mode, the first optical communication device may further reuse a transmission line of an OTDR signal, and send a pilot tone modulation signal to the second optical communication device.

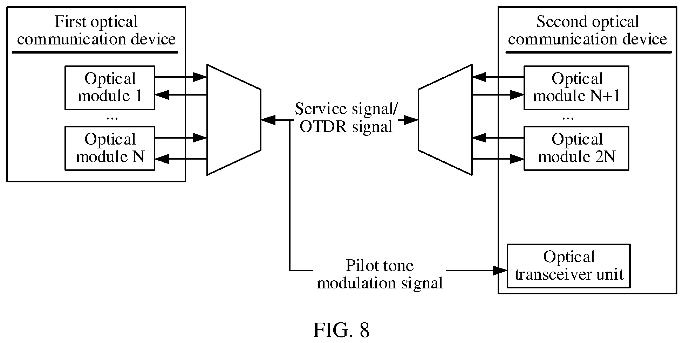

In another possible scenario, refer to FIG. 8. FIG. 8 is a diagram of another possible architecture of an optical communication system according to an embodiment of this application. A difference from the architecture of the optical communication system shown in FIG. 7 lies in that the service signal and the pilot tone modulation signal in FIG. 7 may be received by the optical module in the second optical communication device, but a service signal in FIG. 8 may be received by an optical module, and a pilot tone modulation signal may be received by a second optical communication device. For example, the second optical communication device may receive the signal through an optical transceiver unit included in the second optical communication device.

It may be clearly understood by a person skilled in the art that, for convenience and concision of description, division of the foregoing functional units is used as an example for illustration. During actual application, the foregoing functions may be allocated to different functional units for implementation based on a requirement. In other words, an internal structure of the optical module is divided into different functional units to implement all or some of the functions described above. For a specific working process of the foregoing system, optical module, and unit, refer to a corresponding process in the foregoing method embodiment, and details are not described herein again.

In the several embodiments provided in this application, it should be understood that the disclosed system, device, and optical module may be implemented in another manner. For example, the optical module embodiment described above is merely an example. For example, the unit or component division is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or the units may be implemented in an electrical form, a mechanical form, or another form. It should be noted that, the "coupling" in embodiments of this application may be understood as an electrical connection, and a coupling between two elements may be a direct coupling or an indirect coupling between the two elements. For example, that A is connected to B may mean that A is directly coupled to B, or mean that A is indirectly coupled to B through one or more other elements. For example, that A is coupled to B may mean that A is directly coupled to C, C is directly coupled to B, and A is coupled to B through C. In some scenarios, the "coupling" may alternatively be understood as a connection.

The units described as separate components may or may not be physically separate, and components displayed as units may or may not be physical units. In other words, the components may be located at one position, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in a form of a software product. The computer software product is stored in a storage medium and includes several instructions for indicating a computer device (which may be a personal computer, a server, a network device, or the like) or a processor (processor) to perform all or some of the steps of the methods described in embodiments of this application. The storage medium includes any medium such as a USB flash drive, a removable hard disk, a ROM, a RAM, a magnetic disk, or an optical disc, that can store program code.

The foregoing embodiments are merely used to describe the technical solutions in this application in detail. However, the descriptions of the foregoing embodiments are merely intended to help understand the method and the core idea of the present invention, and should not be construed as a limitation on the present invention. Any variation or replacement readily figured out by a person skilled in the art within the technical scope disclosed in the present invention shall fall within the protection scope of the present invention.

It should be noted that, in the descriptions of this application, "at least one" means one or more, and "a plurality of" means two or more. In view of this, in embodiments of this application, "a plurality of" may alternatively be understood as "at least two". "And/or" describes an association relationship between associated objects, and indicates that three relationships may exist. For example, A and/or B may represent the following three cases: Only A exists, both A and B exist, and only B exists. In addition, unless otherwise stated, the character "/" generally indicates an "or" relationship between the associated objects. In addition, it should be understood that in the descriptions of this application, terms such as "first" and "second" are merely used for a purpose of distinguishing for description, but should not be understood as an indication or implication of relative importance, or cannot be understood as an indication of implication of a sequence.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, the word "example" is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numeric numbers are distinguished merely for ease of description and are not intended to limit the scope of embodiments of this application. Sequence numbers of the foregoing processes do not mean an execution sequence, and the execution sequence of the processes should be determined based on functions and internal logic of the processes. In addition, the terms "include", "have", and any variant thereof are intended to cover a non-exclusive inclusion, for example, include a series of steps or units. For example, a method, a system, a product, or a device is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to this application without departing from the spirit and scope of this application. Correspondingly, this specification and the accompanying drawings are merely example descriptions of solutions defined by the appended claims, and are considered as any or all of modifications, variations, combinations, or equivalents that cover the scope of this application.

Clearly, a person skilled in the art can make various modifications and variations to this application without departing from the spirit and scope of the present invention. In this case, this application is intended to cover these modifications and variations of embodiments of this application provided that they fall within the scope of the claims of this application and their equivalent technologies.

## Claims

1. An optical module, comprising: a control unit, a laser service driving circuit, an optical transmitting unit, and a first optical receiving unit, wherein
the control unit is configured to: determine a target mode of the optical module from a plurality of working modes, and control to output a target signal corresponding to the target mode to the laser service driving circuit, wherein the plurality of working modes comprise at least one of an optical time domain reflectometer OTDR mode and a service mode;
the laser service driving circuit is configured to output a laser signal to the optical transmitting unit based on the target signal, wherein if the target mode is the OTDR mode, the laser signal is a first OTDR signal; or if the target mode is the service mode, the laser signal is a service signal;
the optical transmitting unit is configured to transmit the laser signal; and
the first optical receiving unit is configured to: when the target mode is the OTDR mode, receive and transmit, to the control unit, a second OTDR signal returned in an optical fiber, wherein the first OTDR signal and the second OTDR signal are used to perform optical signal transmission analysis.

2. The optical module according to claim 1, wherein the plurality of working modes further comprise a combination mode of a pilot tone modulation mode and the service mode;
if the target mode is the combination mode, the laser signal is the service signal and a pilot tone modulation signal, and the pilot tone modulation signal is used to modulate the service signal; and
that the optical transmitting unit is configured to transmit the laser signal is that the optical transmitting unit is specifically configured to transmit a service signal modulated based on the pilot tone modulation signal.

3. The optical module according to claim 1 or 2, wherein the optical module further comprises a second optical receiving unit; and
the second optical receiving unit is configured to receive the pilot tone modulation signal from the optical fiber.

4. The optical module according to any one of claims 1 to 3, wherein a first output end of the control unit is coupled to a first input end of the laser service driving circuit through a first line, and a second output end of the control unit is coupled to a second input end of the laser service driving circuit through a second line; and
that the control unit is configured to control to output a target signal corresponding to the target mode to the laser service driving circuit is that the control unit is specifically configured to:
if the target mode is the OTDR mode, output a target signal corresponding to the OTDR mode to the laser service driving circuit through the first line; or
if the target mode is the service mode, output a target signal corresponding to the service mode through the second line.

5. The optical module according to claim 4, wherein the plurality of working modes further comprise the combination mode of the pilot tone modulation mode and the service mode; and
that the control unit is configured to control to output a target signal corresponding to the target mode to the laser service driving circuit is that the control unit is specifically configured to:
if the target mode is the combination mode, output a first target sub-signal through the first line, and output a second target sub-signal through the second line, wherein
the first target sub-signal indicates the pilot tone modulation mode, and the second target sub-signal indicates the service mode.

6. The optical module according to any one of claims 1 to 5, wherein
the target mode is the OTDR mode, and the target signal is a third OTDR signal; and
that the laser service driving circuit is configured to output a laser signal to the optical transmitting unit based on the target signal is that the laser service driving circuit is specifically configured to: perform driving processing on the third OTDR signal, and output a first OTDR signal having a driving capability.

7. The optical module according to claim 6, wherein the optical module further comprises a filter circuit, and an output end of the control unit is coupled to an input end of the laser service driving circuit through the filter circuit; and
the filter circuit is configured to: filter the third OTDR signal, and output a filtered third OTDR signal to the laser service driving circuit.

8. The optical module according to any one of claims 1 to 5, wherein the target mode is the OTDR mode, and the target signal is an OTDR indication signal indicating to generate an OTDR signal; and
that the laser service driving circuit is configured to output a laser signal to the optical transmitting unit based on the target signal is that the laser service driving circuit is specifically configured to generate the first OTDR signal based on the target signal.

9. The optical module according to any one of claims 1 to 5, wherein the optical module further comprises: an amplification and filter circuit, an output end of the control unit is coupled to an input end of the optical transmitting unit through the amplification and filter circuit, and the target signal is an OTDR indication signal indicating to generate an OTDR signal;
the amplification and filter circuit is configured to: generate a fourth OTDR signal based on the target signal from the control unit, and output the fourth OTDR signal to the optical transmitting unit; and
the optical transmitting unit is further configured to transmit the fourth OTDR signal.

10. The optical module according to claim 2, wherein the target mode is the combination mode, and the pilot tone modulation signal is generated in the following manner:
the target signal output by the control unit is the pilot tone modulation signal; or
that the laser service driving circuit is configured to output a laser signal to the optical transmitting unit based on the target signal is that the laser service driving circuit is specifically configured to generate the pilot tone modulation signal based on the target signal, wherein the target signal is a pilot tone modulation indication signal indicating to generate the pilot tone modulation signal; or
the optical module further comprises an amplification and filter circuit, an output end of the control unit is coupled to an input end of the optical transmitting unit through the amplification and filter circuit, and the amplification and filter circuit is configured to: generate the pilot tone modulation signal based on the target signal from the control unit, and output the pilot tone modulation signal to the optical transmitting unit, wherein the target signal is a pilot tone modulation indication signal indicating to generate the pilot tone modulation signal.

11. The optical module according to any one of claims 1 to 10, wherein that the control unit is configured to determine a target mode of the optical module from a plurality of working modes is that the control unit is specifically configured to:
detect and respond to a first preset event, determine that the target mode is the OTDR mode, and determine, in time other than the OTDR mode, that the target mode comprises the service mode, wherein
the first preset event comprises one or a combination of: detecting that a first preset condition for enabling the OTDR mode is satisfied, detecting a first user instruction for enabling the OTDR mode, and receiving a communication control signal for enabling the OTDR mode from an optical communication device.

12. The optical module according to any one of claims 1 to 11, wherein
the control unit is further configured to: receive the second OTDR signal from the first optical receiving unit, and obtain exception information of the second OTDR signal relative to the first OTDR signal based on the second OTDR signal, wherein the exception information is used to determine a loss or a fault position in the optical fiber.

13. An optical communication device, comprising at least one optical module according to any one of claims 1 to 12 and one or more processors, wherein
the one or more processors are configured to: process a to-be-transmitted service signal, and output the to-be-transmitted service signal to any one of the at least one optical module according to any one of claims 1 to 12.

14. The optical communication device according to claim 13, wherein
the one or more processors are further configured to: detect and respond to a second preset event, and output, to a control unit in a first optical module, a communication control signal used to enable an OTDR mode, wherein
the second preset event comprises one or a combination of: detecting that a second preset condition for enabling the OTDR mode is satisfied, and detecting a second user instruction for enabling the OTDR mode.

15. An optical communication system, comprising at least one optical communication device according to claim 13 or 14, wherein
a first optical communication device is configured to: when a target mode is an OTDR mode, transmit a first OTDR signal to an optical fiber between the first optical communication device and a second communication device through a comprised first optical module;
the first optical communication device is further configured to: when the target mode is the OTDR mode, receive, through the comprised first optical module, a second OTDR signal returned in the optical fiber between the first optical communication device and the second communication device;
the first optical communication device is further configured to: when the target mode is a service mode, transmit a service signal to the second communication device through the comprised first optical module; and
the first optical communication device is the optical communication device according to claim 13 or 14.

16. The optical communication system according to claim 15, wherein a plurality of working modes further comprise a combination mode of a pilot tone modulation mode and the service mode; and if the target mode is the combination mode, a laser signal is the service signal and a pilot tone modulation signal; and
the first optical communication device is further configured to: when the target mode is the combination mode, transmit the service signal to the second communication device through the comprised first optical module, and transmit the pilot tone modulation signal to the second communication device through the comprised first optical module.
